**Europäisches Patentamt**

**European Patent Office**

**Office européen des brevets**

(19)

(11)  **EP 0 725 367 B1**

(12)  **EUROPEAN PATENT SPECIFICATION**

(45) Date of publication and mention
of the grant of the patent:
**02.08.2000  Bulletin 2000/31**

(51) Int Cl.$^7$: **G06T 15/50**

(21) Application number: **96300624.2**

(22) Date of filing: **30.01.1996**

(54) **Computer 3D rendering method and apparatus**

Rechnerbasierte 3D-Darstellungsverfahren und -System

Méthode et système de rendu 3D par calculateur

(84) Designated Contracting States:
**DE ES FR IT**

(30) Priority:  **31.01.1995  GB 9501834**

(43) Date of publication of application:
**07.08.1996  Bulletin 1996/32**

(73) Proprietor: **Imagination Technologies Limited
Kings Langley, Hertfordshire WD4 8LX (GB)**

(72) Inventors:
 • **Ashton, Martin
   Kingston-Upon-Thames, KT2 6HF (GB)**
 • **Fenney, Simon James
   Street Village, Hertfordshire, SG13 8QR (GB)**
 • **Yassaie, Hossein
   Chesham, Buckinghamshire,HP5 2RS (GB)**

(74) Representative: **Robson, Aidan John
Reddie & Grose
16 Theobalds Road
London WC1X 8PL (GB)**

(56) References cited:
 • **COMPUTER AIDED DESIGN, vol. 21, no. 1,
   January 1989, LONDON GB, pages 38-48,
   XP000047147 EO AND KYUNG: "HYBRID
   SHADOW TESTING SCHEME FOR RAY
   TRACING"**
 • **VISUALIZATION '90, 23 - 26 October 1990, LOS
   ALAMOS CA US, pages 298-306, XP000244864
   HSU AND STAUDHAMMER: "SUPERPOSING
   IMAGES WITH SHADOW CASTING"**
 • **IEEE COMPUTER GRAPHICS AND
   APPLICATIONS, vol. 13, no. 5, September 1993,
   NEW YORK US, pages 78-83, XP000511133
   WOO: "EFFICIENT SHADOW COMPUTATIONS
   IN RAY TRACING"**
 • **COMPUTER AIDED DESIGN, vol. 24, no. 2,
   February 1992, LONDON GB, pages 93-104,
   XP000247680 CHOI AND KYUNG: "PYSHA: A
   SHADOW-TESTING ACCELERATION SCHEME
   FOR RAY TRACING"**
 • **IBM TECHNICAL DISCLOSURE BULLETIN, vol.
   33, no. 3A, August 1990, NEW YORK US, pages
   209-211, XP000123908 "SOLID LIGHT FOR
   SOLID MODELLING"**

## Description

This invention relates to computer 3D rendering systems of the type described in our British patent application No. 9414834.3 (publication number GB-A-2 281 682).

British patent application No. 9414834.3 describes a 3D rendering system in which each object in a scene to be viewed is defined as a set of infinite surfaces. Each elementary area of a screen on which an image is to be displayed has a ray projected through it from a viewpoint into the three-dimensional scene. The location of the intersection of the projected ray with each surface is then determined. From these intersections it is then possible to determine whether any new intersected surface is visible at that elementary area. The elementary area is then shaded for display in dependence on the result of the determination.

The system is implemented in a pipeline type processor comprising a number of cells each of which can perform an intersection calculation with a surface. Thus a large number of surface intersections can be computed simultaneously. Each cell is loaded with a set of coefficients defining the surface for which it is to perform the intersection test.

The system is capable of generating shadows by defining volumes in shadow in the same way as solid objects, that is to say they are defined as a set of infinite surfaces. These shadow objects are then processed in the same way as solid objects. Once all the shadow and non-shadow objects have been processed, it is a straightforward matter to determine whether the surface visible at a particular pixel is in shadow by comparing the position of the visible surface with the furthest forward facing surface and the nearest reverse facing surface of the shadow object and checking to see whether the visible surface is within that range. If it is then a flag associated with that surface is set to indicate that a modification to its shade or colour needs to be made to simulate the effect of shadowing.

Preferred embodiments of the present invention seek to improve the performance of the pipeline processor described in British patent application No. 9414834.3 by sub-dividing a scene into a variety of sub-regions for processing. These sub-regions are preferably rectangular tiles.

Another embodiment of this invention seeks to provide a system in which spotlight-type effects can be generated within a scene.

The invention is defined with more precision in the appended claims to which reference should now be made.

Preferred embodiments of the invention will now be described in detail, by way of example, with reference to the drawings, in which:-

**Figure 1** schematically shows a spotlight type effect to be modelled;
**Figures 2A, 2B, and 2C** show the way in which concave objects are dealt with by the system;
**Figure 3** shows schematically a rectangular tile containing four objects to be processed by the system;
**Figure 4** shows schematically the same tile divided into four sub-tiles for processing;
**Figure 5** shows further sub-divisions of tiles;
**Figure 6** shows a variable tile size arrangement;
**Figure 7** shows schematically the arrangement for processing elements of the prior art system;
**Figure 8** shows an alternative arrangement for the prior art system;
**Figure 9** shows an arrangement of tiles having a different number of surfaces per tile for mixed processing in accordance with an embodiment of the invention;
**Figure 10** shows a block diagram of a pipeline processor embodying the invention;
**Figure 11** shows the manner in which surface data is retrieved from memory for use in an embodiment of the invention; and
**Figure 12** shows a plurality of pipeline processing embodying another aspect of the invention.

In order to make computer-generated three-dimensional images more lifelike, it is important to be able to simulate the effect of a spotlight in a night time scene. For example, car headlights, search lights, and landing lights are all things which it may be desired to simulate.

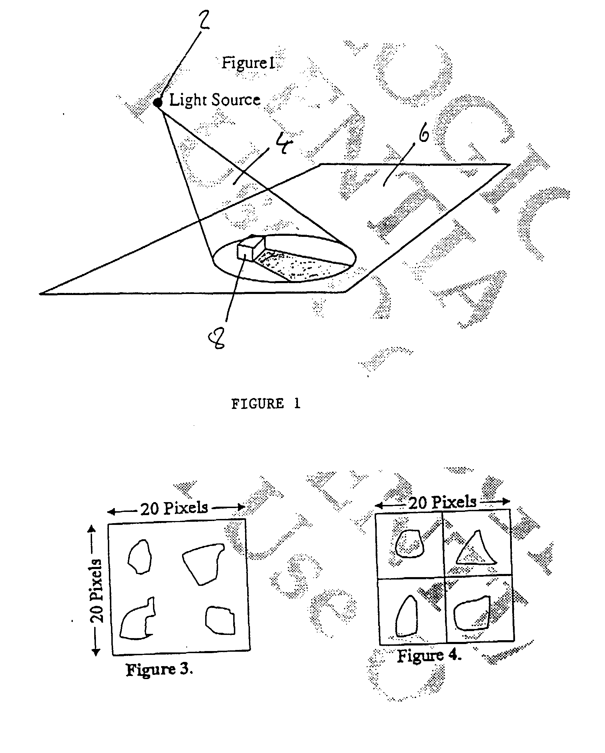

The type of effect is illustrated in Figure 1 in which a light source 2 illuminates a cone-shaped volume 4 of light which is projected onto a surface 6. An object 8 positioned on the surface is illuminated by the cone of light 4.

The cone-shaped volume 4 is referred to as a light volume. This is to all intents and purposes, the opposite of the shadow volumes which are described in British patent No. 9414834.3. A light volume is a region of space whose shape is determined by the characteristics of the light source. All objects or parts of objects which are outside this area are in shadow with respect to the light source.

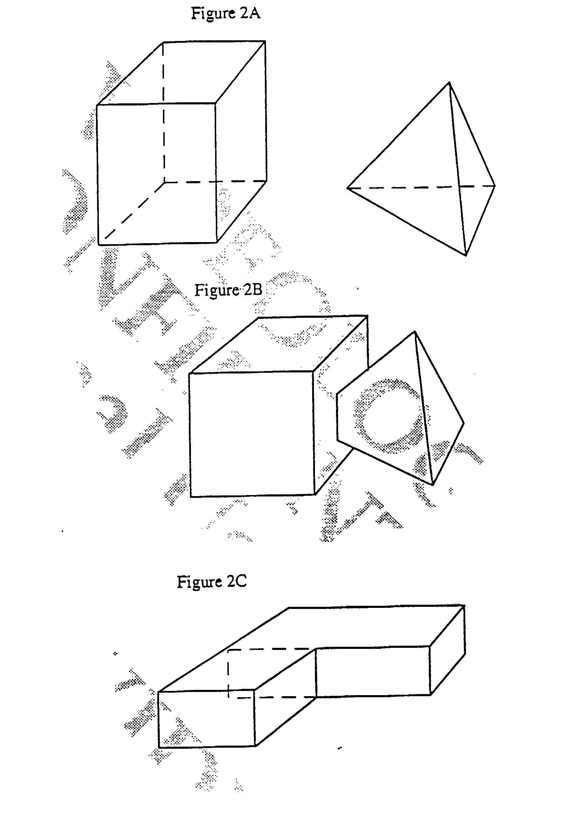

In order to render the scene the object 8 is defined as a set of surfaces as is the light volume 4. In the case where three-dimensional shapes are concave it is preferable, as in British patent application No. 9414834.3 to model the object as a collection of convex objects. This is illustrated in Figures 2A, 2B, and 2C. Figures 2A and 2B show two concave objects arranged to intersect to produce an object with concavities. Figure 2C shows how an object with concavities can be split into two convex objects.

As described in British patent application No. 9414834.3, after all the non-shadow convex objects have been processed, we have, at any particular pixel, the distance to the visible surface at that point. Thus, to find whether the surface at that pixel is in a light object we then need to process the surfaces defining the light volume 4 to find the furthest forward facing surface and the nearest reverse facing surface of the light object. If the furthest forward facing surface is closer to the viewpoint than the nearest reverse facing surface and the visible surface is between them, then that visible surface is within the light volume. If the furthest forward surface is nearer to the viewpoint than the nearest reverse surface and the visible surface is between them then the surface of the object is within the light volume and a flag is associated with it to indicate that its colour will need to be modified to simulate the effect of light. If the furthest forward surface is further from the viewpoint than the nearest reverse surface then the object is outside the light volume and a flag has to be set to indicate that this colour will need to be modified to simulate the effect of shadowing.

Light volumes are processed before the shadow volumes of GB 9414834.3. If a surface of a pixel is outside the light volume then the shadow flag associated with the surface is asserted. In the case of surfaces falling within the light volume shadow volumes are generated within the light volume to simulate shadows cast by the light source and hence objects within the light volume cast shadows.

Light volumes do not require any additions to the architecture as given in Patent No. 9414834.3. The only change that is required is that the operation code associated with each plane has to be extended so that planes can be classed as light volume objects, just as there is currently an operation code to indicate shadow volume objects. The light volume object uses the same logic as the shadow volume object except that the output to the shadow flag is inverted if the surface is a light volume surface.

Turning now to ways in which the performance of the rendering system may be improved, it has been proposed that the screen be divided into a number of sub-regions or tiles. Then, for each tile, only those objects within the tile will be processed. This, decreases the average number of surfaces to be processed when determining which surface is visible at any particular pixel.

A gross elimination process such as surrounding complex objects with bounding volumes can be first used to test which objects apply to the current region being rendered. The bounding volume is defined by finding the areas to which particular objects apply. The sub-regions can, in general, be any shape. However, the simplest technique is to divide the screen into rectangular tiles.

All the bounding volumes of objects are projected onto screen space (the array of pixels defining the image plane) and are tested against corners of the tiles. Those bounding volumes of objects which are completely outside the tile are discarded for that tile. Thus, the number of surfaces which need to be processed per pixel within a tile becomes less and hence the total time to render an image is reduced since the total processing time for all the tiles will be reduced.

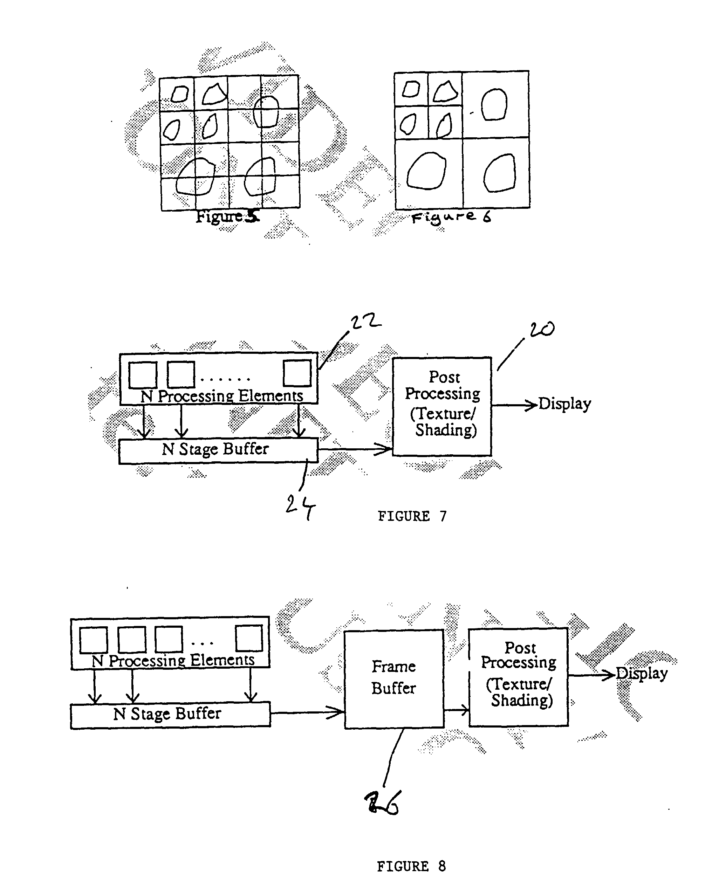

Figure 3 shows the bounding volumes of four objects projected onto an array of twenty pixels by twenty pixels.

If each object is defined by ten surfaces, then the total time to render Figure 3 will be 400 pixels x 40 surfaces which equals 16,000 cycles. Figure 4, however, shows an area of 20 x 20 pixels sub-divided into four subarrays of 10 x 10 pixels. Thus the time to render the objects in Figure 4 will be defined by the time to render the object in end 10 x 10 pixel tile. This will be 100 pixels by 10 surfaces which equals 1,000 cycles. Thus to render the whole 20 x 20 array, the time take will be 4,000 cycles. Thus there is a 75% saving in processing time using this arrangement.

However, the objects of the image are not normally evenly distributed over the entire screen. Therefore, using tiles with variable sizes allows the same performance enhancement to be gained with fewer tiles or better performance with the same number of tiles. This is shown in Figures 5 and 6.

In Figure 5 there are a total of seven objects and 16 tiles each 5 pixels by 5 pixels. Therefore, the time taken to render a scene will be 16 x 25 x 10 which gives 4,000 cycles.

In Figure 6 the number of tiles is reduced by having three 10 pixel x 10 pixel tiles encompassing the larger objects and four 5 pixel x 5 pixel tiles encompassing the smaller objects. The time to process the 10 x 10 pixel tiles will be 100 pixels x 10 surfaces x 3 tiles which equals 3,000 cycles. The time to process the 5 pixel x 5 pixel tiles is 25 pixels x 10 surfaces x 4 tiles which equals 1,000 cycles. Thus the total time to render Figure 6 will be 4,000 cycles, the same as it would take to render Figure 5. However, Figure 6 only has 7 tiles as opposed to the 16 of Figure 5. Thus, a saving is made on the sub-division of the scene into tiles.

In a preferred embodiment of the invention projection techniques are used which project boundary boxes around complex objects. Firstly the distribution of objects around the visible screen is determined and this then allows suitable tile sizes to be defined in dependence on that distribution.

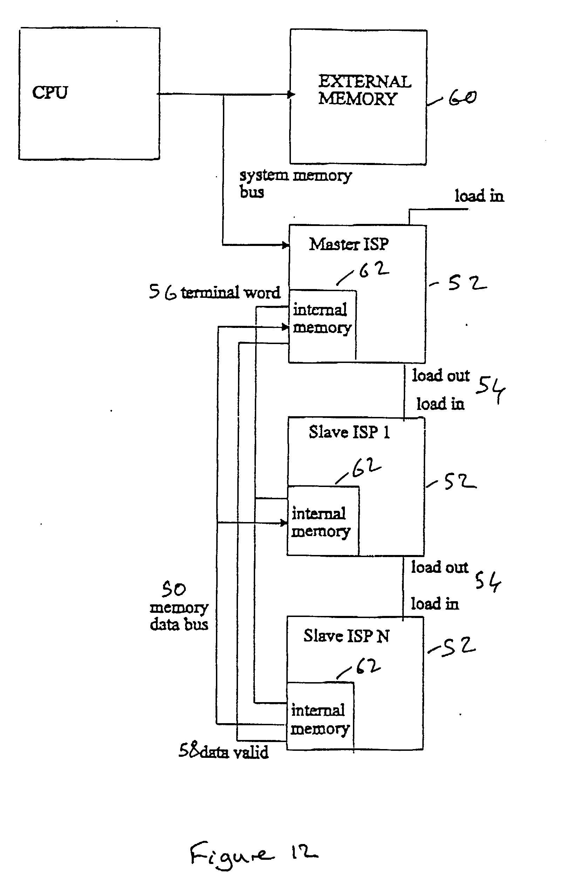

The surfaces defining the various objects are stored in one contiguous list as described in Patent No. 9414834.3. However, for each tile, (a sub-divided area of the screen), there is another list of object pointers which point to the individual objects which reside in that tile. This is to avoid storing identical surfaces for each tile, as one object made of many surfaces could be in a number of tiles. This is illustrated in Figure 11. At the start of the object pointer list there is a x,y start position and a x,y size. This gives the top left hand position and the width and height in pixels of the tile. Thus, allowing for variable tile sizes.

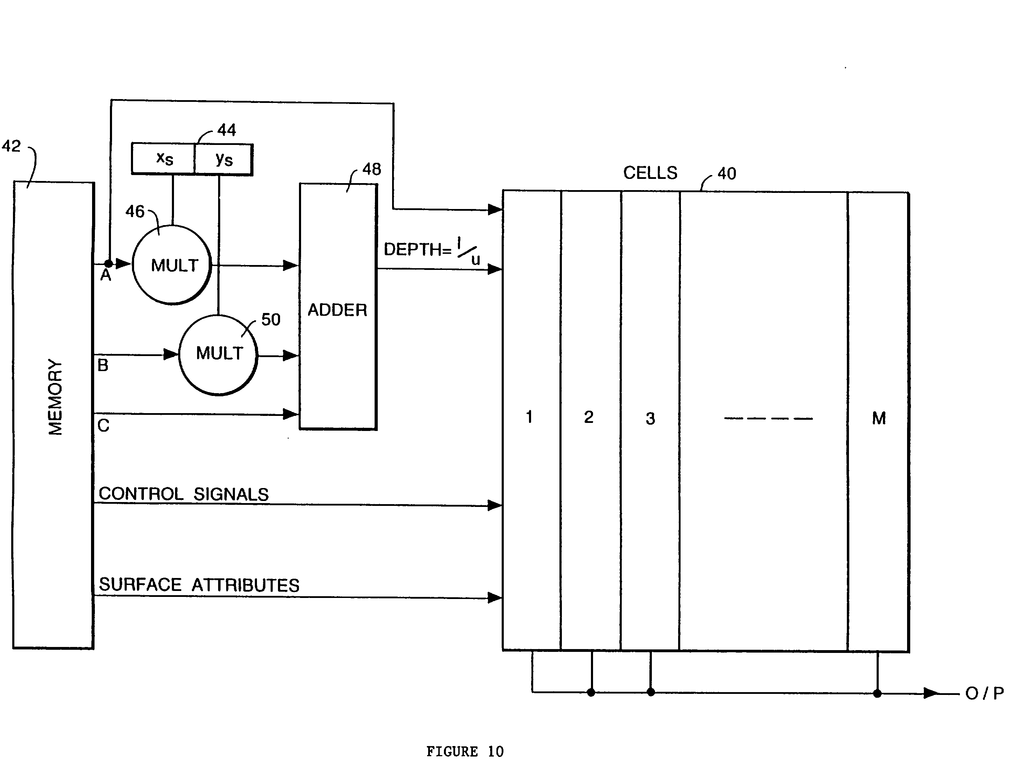

At the start of rendering the pointer list is traversed and the x,y position and size is read. The x,y position is stored in register 44 of Figure 10. This gives the starting position for the rendering. As each pointer is read the appropriate surfaces pointed to are also read and stored in the internal memory. After all the pointers have been read the internal memory contains all the objects to be processed. The objects are processed as normal. After the tile has been rendered the next object pointer list is traversed as described earlier and the internal memory contains all the objects for the next tile. This continues until all the tiles have been completed.

A further improvement to sub-dividing the screen into sub-regions (tiles) is achieved by having the ability to process the tiles non-sequentially.

The system described in British patent application No. 9414834.3 uses multiple processing elements that operate on a group of adjacent pixels at any one time. For example, if a tile consists of N x M pixels there may be an N element parallel processing engine which will process one row of the tile at a time for each input plane. The processing time, per row, in terms of clock cycles will be equal to the number of planes in or associated with that tile. Such an arrangement is shown in Figure 7. If there are tiles which have a very small number of planes, then the parallel processing elements may have to stay idle while the last processed row of pixels is post-processed (e.g. has texture and shading added) by a post processing system 20. This receives pixel data from the N processing elements 22, via an N stage buffer 24. The speed will be limited by the speed of the post-processing unit 20.

One way to overcome this speed inefficiency is to ensure that the post-processing unit 20 can match the peak output rate of the N processing elements 22 for a small numbers of surfaces. This would make the post-processing unit more complex and expensive. Another solution would be to interpose a frame buffer 26 between the N stage buffer 24 and the post-processing unit 20 as shown in Figure 8. Preferably this frame buffer would accommodate the same number of pixels as the display. This, however, would again lead to additional expense.

A preferred embodiment of the present invention solves this problem in an efficient and inexpensive manner by intermixing the processing of rows from tiles so that rows from tiles with a smaller number of planes contained within them are interleaved with rows from tiles with a large number of planes.

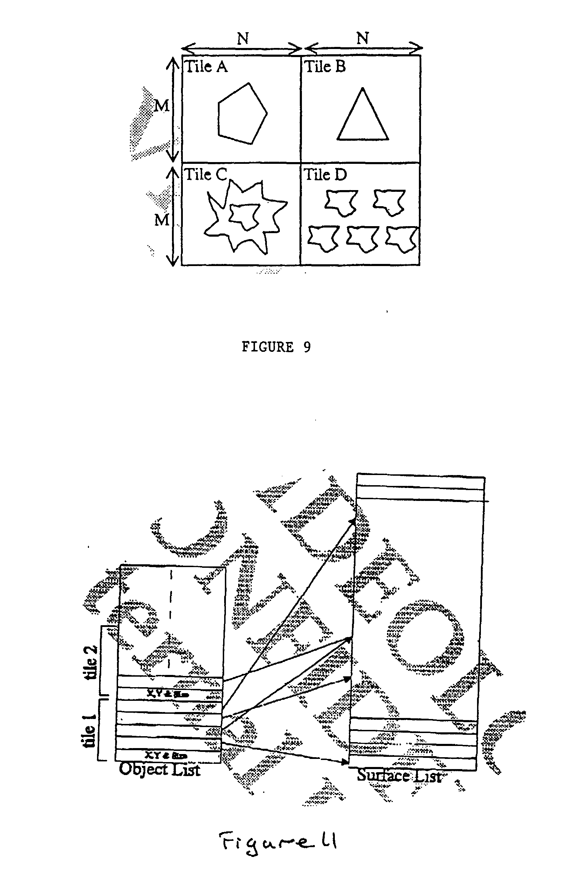

For example, Figure 9 shows tiles A, B, C and D all having different numbers of surfaces defining objects within them. If tiles are processed one at a time in the A, B, C, D order then during the processing of the first two tiles the N element parallel processing array 22 will spend idle time since only a small number of planes need to be processed. However, by processing a row from tile A followed by a row from tile C which has a large number of planes associated with it, then the average output rate of data from the N processing elements 22 will be reduced. Thus, the only buffering needed will be the N stage buffer shown in Figure 7.

The surfaces are stored exactly as detailed above. However, rather than reading in a list of objects for just one tile into the internal memory, two adjacent object lists are read and stored in the internal memory. The first set of surfaces are processed for one line of the first tile which is then followed by processing the second set of surfaces for the second tile. The x,y position of the tiles are stored in two registers such as numbered 42 in Figure 10. These are swopped between as lines from the two different tiles are processed. The tiles which are to be processed together have to have their object lists adjacent in the external memory. In the example above with reference to Figure 11, tile 1 would be tile A and tile 2 would be tile C.

Figure 10 shows an implementation of a system of the type described in British patent application No. 9414834.3 based on an array of pipeline processing cells 40, a precalculation unit 40,46,50,48 and a memory 42. The memory stores a list of instruction words comprising surface parameters (ABC), control bits and surface attributes. The practical and cost effective VLSI implementation of such a system requires that instruction words would be stored in an onchip cache memory. The reasons for this are two-fold. First, the instruction words are in a very long format (typically 96 bits) and therefore sharing external memory with, for example a 32 bit processor would involve multiple bus cycles per instruction word fetch. Secondly, the rate of dispatch of instruction words is directly proportional to the surface processing performance of the system. Taken together these points indicate that any external memory solution must use high speed, wide and dedicated memory.

Using a cache implementation of this system exploits the fact that during the processing of a given scene many references are made to the same instruction word for processing a particular surface. In the variable tile size enhancement presented above the tile size can be optimised such that all tiles contain a roughly constant number of surfaces and thus a roughly constant number of instruction words. If the cache size is larger than this value then all instruction words for a given tile will fit in the cache. Under these conditions the advantage in time is given by the following:

Time to process a tile from external memory = PC x I x MEXT

Time to process a tile from cache memory = I x (MEXT+) PC - 1) x MINT)

Percentage improvement = 1 - (MEXT + (PC - 1) x MINT))/(PC x MEXT)

where T = tile size, PE = the number of pipeline elements, PC = the number of pipelines cycles = T/PE, I = the number of instruction words per tile, MEXT = external memory access time, MINT = cache memory access time.

As scene complexity increases practical limits to cache size dictate that not all instruction words in the given tile can be cached.

The problem of scaleability of memory capacity in a multichip implementation of the system described in patent application 9414834.3 can be solved by a further embodiment of the invention.

An implementation of a 3D rendering system consists of N 3D processing units (henceforth referred to as ISP), a system processor and system memory, is shown in Figure 12. Each ISP 52 contains an M instruction word memory which functions as described above. In such a configuration all ISP's are working on a different output line of the same tile, and are thus all operating on the same instruction word at any given time. For the purpose of this description the ISP working on tile line n is referred to as master, the ISP working on tile line (n+1 is referred to as slave_1, that working on tile line (n+m) as slave_m etc. The memory controllers of all ISP's are connected by a memory interconnect bus 50 consisting of the following elements:

1) Data Bus 50: Width of instruction word : Bi directional

2) Load In / Load Out 54: Synchronous daisy chain signals which indicate transfer of cache masterchip: Input / Output.

3) Terminal Word 56: Indicates that current instruction word is the last in the list - driven by chip which is currently transmitting data.

4) Data Valid 58: Driven by the current transmitter to qualify data on data bus.

The master ISP 52 is designated by having its load_in input tied `1' at reset. The master is responsible for following a hierarchical list of pointers which ultimately reference instruction words. At the start of a given tile a memory load phase begins in which the master ISP will begin fetching instruction words from system memory 60, assembling the words internally and transmitting them in a synchronised fashion to three destinations : the master internal memory 68, the master processing pipeline and the memory data bus 50. At this point only the master is storing instructions in its memory. The data valid signal is necessary in systems where the master may be denied access to system memory for periods of time. It is also used to indicate a data bus turn around cycle which occurs when memory data bus ownership changes.

On the transfer cycle when the master memory is full, the master drives load_in of slave_1 to '1', indicating that slave_1 must begin storing instruction words in its memory. This process continues down the chain of slave ISP's until the final instruction word is passed out by the master. At this point terminal_word is driven to '1', and the slave which is currently loading its memory latches the value of the terminal memory address. This completes the memory load phase.

There follows a series of memory read phases which continue until the current tile processing is complete. Memory read commences with the master ISP reading out its instruction word list and passing the values to its processing pipeline and to the memory data bus. On the final access, the master drives load_in of slave_1 to `1', indicating that slave_1 must begin reading instruction words from its memory. This process continues down the chain of slave ISP's until the final instruction word is passed out by the final slave. At this point terminal_word is driven to `1', and the process repeats from the master. Note that there will be a lost cycle between each change of data bus mastership to allow for the turnaround time of the buffers.

## Claims

1. A method for shading a three dimensional image for display on a screen comprising the steps of supplying data defining a group of infinite surfaces representing each object in the image, generating depth values for each surface for each elementary area of the display in dependence on the distance of that surface from an image plane, determining whether any surface is visible at that elementary area, said method being characterised by the further steps of designating an objet represented by a group of surfaces as a light volume (4) being a region of space whose shape is determined by a light source and such that all objects or parts thereof outside this region are not illuminated by the light source, determining a depth value for each surface of the light volume for each elementary area of the display in dependence on the distance of that surface from the image plane, and modifying the colour of that elementary area in dependence on the location of any visible object surface in relation to the determined depth of the light volume surface.

2. A method according to claim 1 comprising the step of determining a bounding volume for each object projected onto the display screen, and subdividing the display into a plurality of sub-regions, the size of the sub-regions being dependent on the complexity of the image in each area of the screen, and wherein the step of generating depth values for each surface does this for each surface in each sub-region.

3. A method for shading according to claim 2 including the step of interleaving the determination of depth values for groups of pixels in a sub-region with the determination of depth values for groups of pixels in other sub-regions.

4. A method for shading according to claim 3 wherein the groups of pixels comprise lines of pixels in the sub-regions.

5. A method for shading according to claim 3 or 4 wherein groups of pixels from sub-regions in less complex parts of the image are interleaved with groups of pixels from sub-regions in more complex parts of the image.

6. Apparatus for shading a three dimensional image for display on a screen comprising means (42) for supplying data defining a group of infinite surfaces representing each object in the image, means (44, 46, 48) for generating a depth value for each surface for each elementary area of the display in dependence on the distance of that surface from an image plane, means (40) for determining whether any surface is visible at that elementary area, said apparatus being characterised by further comprising means for designating an object represented by a group of surfaces as a light volume (4) being a region of space whose shape is determined by a light source and such that all objects or parts thereof outside this region are not illuminated by the light source, means for determining a depth value for each surface of the light volume for each elementary area of the display in dependence on the distance of that surface from the image plane, and means for modifying the colour of that elementary area in dependence on the location of any visible object surface in relation to the determined depth of the light volume surface.

7. Apparatus according to claim 6 comprising means for determining a bounding volume for each object projected on to the display screen, means for sub-dividing the display screen into a plurality of sub-regions, the size of the sub-regions being dependent on the complexity of the image in each area of the screen, and wherein the means for generating a depth value generates the value for each surface for each pixel of each sub-region in dependence of the distance of that surface from an image plane.

8. Apparatus according to claim 7 including means for interleaving the determination of depth values for surfaces for groups of pixels in one sub-region with the determination of depth values for surfaces for groups of pixels in other sub-regions.

9. Apparatus for shading according to claim 8 wherein the groups of pixels comprise lines of pixels in the sub-regions.

10. Apparatus for shading according to claim 8 or 9 wherein groups of pixels in sub-regions in less complex parts of the image are interleaved with groups of pixels in sub-regions in more complex parts of the image.

**Patentansprüche**

1. Verfahren zum Schattieren eines dreidimensionalen Bildes für die Anzeige auf einem Bildschirm, umfassend die folgenden Schritte: Zuführen von Daten, die eine Gruppe von infiniten Oberflächen definieren, die jeweils ein Objekt in dem Bild repräsentieren, Erzeugen von Tiefenwerten für jede Fläche für jeden Elementarbereich der Anzeige in Abhängigkeit von der Entfernung dieser Fläche von einer Bildebene, Bestimmen, ob eine Fläche in diesem Elementarbereich sichtbar ist, wobei das genannte Verfahren durch die folgenden weiteren Schritte gekennzeichnet ist: Bezeichnen eines Objektes, das durch eine Gruppe von Flächen als ein Lichtvolumen (4) repräsentiert wird, das eine Raumregion ist, deren Form von einer Lichtquelle bestimmt wird, und so, daß alle Objekte oder Teile davon außerhalb dieser Region nicht von der Lichtquelle beleuchtet werden, Bestimmen eines Tiefenwertes für jede Fläche des Lichtvolumens für jeden Elementarbereich der Anzeige in Abhängigkeit von der Entfernung dieser Fläche von der Bildebene, und Modifizieren der Farbe dieses Elementarbereiches in Abhängigkeit von dem Ort einer sichtbaren Objektfläche in bezug auf die bestimmte Tiefe der Lichtvolumenfläche.

2. Verfahren nach Anspruch 1, umfassend den Schritt des Bestimmens eines Begrenzungsvolumens für jedes auf den Anzeigebildschirm projizierte Objekt, und Unterteilen der Anzeige in eine Mehrzahl von Subregionen, wobei die Größe der Subregionen abhängig ist von der Komplexität des Bildes in jedem Bereich des Bildschirms, und wobei der Schritt des Erzeugens von Tiefenwerten für jede Fläche dies für jede Fläche in jeder Subregion tut.

3. Verfahren zum Schattieren nach Anspruch 2, umfassend den Schritt des Verschachtelns der Bestimmung von Tiefenwerten für Gruppen von Bildpunkten in einer Subregion mit der Bestimmung von Tiefenwerten für Gruppen von Bildpunkten in anderen Subregionen.

4. Verfahren zum Schattieren nach Anspruch 3, bei dem die Bildpunktgruppen Bildpunktlinien in den Subregionen umfassen.

5. Verfahren zum Schattieren nach Anspruch 3 oder 4, bei dem die Bildpunktgruppen von Subregionen in weniger komplexen Teilen des Bildes mit Bildpunktgruppen von Subregionen in komplexeren Teilen des Bildes verschachtelt werden.

6. Vorrichtung zum Schattieren eines dreidimensionalen Bildes für die Anzeige auf einem Bildschirm, umfassend ein Mittel (42) zum Zuführen von Daten, die eine Gruppe von infiniten Flächen definieren, die jedes Objekt in dem Bild definieren, Mittel (44, 46, 48) zum Erzeugen eines Tiefenwertes für jede Fläche für jeden Elementearbereich der Anzeige in Abhängigkeit von der Entfernung dieser Fläche von einer Bildebene, ein Mittel (40) zum Bestimmen, ob eine Fläche in diesem Elementarbereich sichtbar ist, wobei die genannte Vorrichtung dadurch gekennzeichnet ist, daß sie ferner folgendes umfaßt: ein Mittel zum Bezeichnen eines Objektes, das durch eine Gruppe von Flächen als ein Lichtvolumen (4) repräsentiert wird, das eine Raumregion ist, deren Form von einer Lichtquelle bestimmt wird, und so, daß alle Objekte oder Teile davon außerhalb dieser Region nicht von der Lichtquelle beleuchtet werden, ein Mittel zum Bestimmen eines Tiefenwertes für jede Fläche des Lichtvolumens für jeden Elementarbereich der Anzeige in Abhängigkeit von der Entfernung dieser Fläche von der Bildebene, und ein Mittel zum Modifizieren der Farbe dieses Elementarbereiches in Abhängigkeit von dem Ort einer sichtbaren Objektfläche in bezug auf die bestimmte Tiefe der Lichtvolumenfläche.

7. Vorrichtung nach Anspruch 6, umfassend ein Mittel zum Bestimmen eines Begrenzungsvolumens für jedes auf den Anzeigebildschirm projizierte Objekt, ein Mittel zum Unterteilen des Anzeigebildschirms in eine Mehrzahl von Subregionen, wobei die Größe der Subregionen abhängig ist von der Komplexität des Bildes in jedem Bereich des Bildschirms, und wobei das Mittel zum Erzeugen eines Tiefenwertes den Wert für jede Fläche für jeden Bildpunkt jeder Subregion in Abhängigkeit von der Entfernung dieser Fläche von einer Bildebene erzeugt.

8. Vorrichtung nach Anspruch 7, umfassend ein Mittel zum Verschachteln der Bestimmung von Tiefenwerten für Flächen für Bildpunktgruppen in einer Subregion mit der Bestimmung von Tiefenwerten für Flächen für Bildpunktgruppen in einer Subregion mit der Bestimmung von Tiefenwerten für Flächen für Bildpunktgruppen in anderen Subregionen.

9. Vorrichtung zum Schattieren nach Anspruch 8, bei der die Bildpunktgruppen Bildpunktlinien in den Subregionen umfassen.

10. Vorrichtung zum Schattieren nach Anspruch 8 oder 9, bei der Bildpunktgruppen in Subregionen in weniger komplexen Teilen des Bildes mit Bildpunktgruppen in Subregionen in komplexeren Teilen des Bildes verschachtelt sind.

**Revendications**

1. Procédé pour ombrer une image tridimensionnelle en vue de son affichage sur un écran comprenant les étapes de fourniture de données définissant un groupe de surfaces infinies représentant chaque objet dans l'image, de génération de valeurs de profondeur pour chaque surface pour chaque zone élémentaire de l'affichage en fonction de la distance de cette surface par rapport à un plan d'image, de détermination si une surface quelconque est visible au niveau de cette zone élémentaire, ledit procédé étant caractérisé par les autres étapes de désignation d'un objet représenté par un groupe de surfaces comme volume de lumière (4) étant une région d'espace dont la forme est déterminée par une source de lumière et de telle sorte que tous les objets ou parties de ceux-ci en dehors de cette région ne soient pas éclairés par la source de lumière, de détermination d'une valeur de profondeur pour chaque surface du volume de lumière pour chaque zone élémentaire de l'affichage en fonction de la distance de cette surface par rapport au plan d'image, et de modification de la couleur de cette zone élémentaire en fonction de l'emplacement de n'importe quelle surface d'objet visible en relation avec la profondeur déterminée de la surface du volume de lumière.

**2.** Procédé selon la revendication 1, comprenant l'étape de détermination d'un volume de délimitation pour chaque objet projeté sur l'écran d'affichage, et de subdivision de l'affichage en une pluralité de sous-régions, la taille des sous-régions dépendant de la complexité de l'image dans chaque zone de l'écran, et dans lequel l'étape de génération de valeurs de profondeur pour chaque surface fait cela pour chaque surface dans chaque sous-région.

**3.** Procédé pour ombrer selon la revendication 2, comportant l'étape d'entrelacement de la détermination de valeurs de profondeur de groupes d'éléments d'image dans une sous-région avec la détermination de valeurs de profondeur de groupes d'éléments d'image dans d'autres sous-régions.

**4.** Procédé pour ombrer selon la revendication 3, dans lequel les groupes d'éléments d'image comprennent des lignes d'éléments d'images dans les sous-régions.

**5.** Procédé pour ombrer selon la revendication 3 ou 4, dans lequel des groupes d'éléments d'image provenant de sous-régions dans des parties moins complexes de l'image sont entrelacés avec des groupes d'éléments d'image provenant de sous-régions dans des parties plus complexes de l'image.

**6.** Dispositif pour ombrer une image tridimensionnelle en vue de son affichage sur un écran comprenant un moyen (42) pour fournir des données définissant un groupe de surfaces infinies représentant chaque objet dans l'image, un moyen (44, 46, 48) pour générer une valeur de profondeur pour chaque surface pour chaque zone élémentaire de l'affichage en fonction de la distance de cette surface par rapport à un plan d'image, un moyen (40) pour déterminer si une surface quelconque est visible au niveau de cette zone élémentaire, ledit dispositif étant caractérisé par le fait qu'il comprend en outre un moyen pour désigner un objet représenté par un groupe de surfaces comme volume de lumière (4) étant une région d'espace dont la forme est déterminée par une source de lumière et de telle sorte que tous les objets ou parties de ceux-ci en dehors de cette région ne soient pas éclairés par la source de lumière, un moyen pour déterminer une valeur de profondeur pour chaque surface du volume de lumière pour chaque zone élémentaire de l'affichage en fonction de la distance de cette surface par rapport au plan d'image, et un moyen pour modifier la couleur de cette zone élémentaire en fonction de l'emplacement de n'importe quelle surface d'objet visible en relation avec la profondeur déterminée de la surface du volume de lumière.

**7.** Dispositif selon la revendication 6, comprenant un moyen pour déterminer un volume de délimitation pour chaque objet projeté sur l'écran d'affichage, un moyen pour subdiviser l'écran d'affichage en une pluralité de sous-régions, la taille des sous-régions dépendant de la complexité de l'image dans chaque zone de l'écran, et dans lequel le moyen pour générer une valeur de profondeur génère la valeur pour chaque surface de chaque élément d'image de chaque sous-région en fonction de la distance de cette surface par rapport à un plan d'image.

**8.** Dispositif selon la revendication 7, comportant un moyen pour entrelacer la détermination de valeurs de profondeur pour des surfaces de groupes d'éléments d'image dans une sous-région avec la détermination de valeurs de profondeur pour des surfaces de groupes d'éléments d'image dans d'autres sous-régions.

**9.** Dispositif pour ombrer selon la revendication 8, dans lequel les groupes d'éléments d'image comprennent des lignes d'éléments d'images dans les sous-régions.

**10.** Dispositif pour ombrer selon la revendication 8 ou 9, dans lequel des groupes d'éléments d'image dans des sous-régions dans des parties moins complexes de l'image sont entrelacés avec des groupes d'éléments d'image dans des sous-régions dans des parties plus complexes de l'image.

Figure 1

Light Source

FIGURE 1

20 Pixels

20 Pixels

Figure 3.

20 Pixels

Figure 4.

Figure 2A

Figure 2B

Figure 2C

Figure 5

Figure 6

FIGURE 7

FIGURE 8

FIGURE 9

Figure 11

FIGURE 10

Figure 12